# EUROPÄISCHE PATENTANMELDUNG

(11) **EP 3 115 594 A1**
(43) Veröffentlichungstag der Anmeldung: **11.01.2017**
(21) Anmeldenummer: 16178253.7
(22) Anmeldetag: 06.07.2016
(51) Int. Cl.: F02N 15/02, F16D 41/066

(54) **STARTERANORDNUNG FÜR DEN ANTRIEBSSTRANG EINES KRAFTFAHRZEUGS**

(30) Priorität: 09.07.2015 DE 102015008895
(71) Anmelder: BorgWarner Inc., Auburn Hills, MI 48326 (US)
(72) Erfinder: ZINDEL, Sebastian, 64342 Seeheim-Jugenheim (DE); VEIT, Matthias Gerhard, 68723 Oftersheim (DE)
(74) Vertreter: BRP Renaud & Partner mbB Rechtsanwälte Patentanwälte Steuerberater

(57) **Zusammenfassung**

Die vorliegende Erfindung betrifft eine Startanordnung (2) für den Antriebsstrang eines Kraftfahrzeugs mit einem Torsionsschwingungsdämpfer (4), der eine erste Komponente (18) und eine zweite Komponente (20) aufweist, die gegen den Widerstand einer Rückstelleinrichtung (22) relativ zueinander verdrehbar sind, zur Anordnung in dem Antriebsstrang und einem Starterfreilauf (32), der eine von einer Starteinrichtung (34) antreibbare Eingangsseite (36) und eine mit der ersten Komponente (18) in Drehmitnahmeverbindung stehende oder bringbare Ausgangsseite (37) aufweist, wobei eine Kopplungseinrichtung (68) vorgesehen ist, über die eine Drehbewegung der zweiten Komponente (20) relativ zu der ersten Komponente (18) in zumindest einer Umfangsrichtung (14; 16) behinderbar oder verhinderbar ist und die Kopplungseinrichtung (68) über den Starterfreilauf (32) aktuierbar oder aktivierbar ist.

## Beschreibung

Die vorliegende Erfindung betrifft eine Startanordnung für den Antriebsstrang eines Kraftfahrzeugs mit einem Torsionsschwingungsdämpfer, der eine erste Komponente und eine zweite Komponente aufweist, die gegen den Widerstand einer Rückstelleinrichtung relativ zueinander verdrehbar sind, zur Anordnung in dem Antriebsstrang und einem Starterfreilauf, der eine von einer Starteinrichtung antreibbare Eingangsseite und eine mit der ersten Komponente in Drehmitnahmeverbindung stehende oder bringbare Ausgangsseite aufweist.

Aus dem Stand der Technik sind Startanordnungen für den Antriebsstrang eines Kraftfahrzeugs bekannt. Die bekannten Startanordnungen weisen einen Torsionsschwingungsdämpfer auf, der beispielsweise als sogenanntes Zweimassenschwungrad ausgebildet sein kann. Der Torsionsschwingungsdämpfer weist dabei eine erste Komponente und eine zweite Komponente auf, die gegen den Widerstand einer Rückstelleinrichtung, in der Regel einer Federeinrichtung, relativ zueinander verdrehbar sind, wobei der Torsionsschwingungsdämpfer zur Anordnung in dem Antriebsstrang konzipiert ist, in der Regel zwischen der Ausgangsseite eines Verbrennungsmotors und der Eingangsseite eines Getriebes. So kann die erste Komponente beispielsweise ein eingangsseitiges Primärelement oder eine eingangsseitige Primärmasse sein, die mit der Antriebswelle eines Verbrennungsmotors verbunden oder verbindbar ist, während die zweite Komponente ein ausgangsseitiges Sekundärelement oder eine ausgangsseitige Sekundärmasse des Torsionsschwingungsdämpfers sein kann, oder umgekehrt. Innerhalb des Antriebsstrangs bewirkt der Torsionsschwingungsdämpfer eine Dämpfung von Drehmomentschwingungen oder -stößen, die von dem Verbrennungsmotor herrühren. Darüber hinaus weisen die bekannten Startanordnungen einen Starterfreilauf auf. Der Starterfreilauf weist eine von einer Starteinrichtung antreibbare Eingangsseite und eine mit der ersten Komponente des Torsionsschwingungsdämpfers in Drehmitnahmeverbindung stehende Ausgangsseite auf. Der Starterfreilauf hat hierbei den Vorteil, dass die Starteinrichtung permanent mit der Eingangsseite des Starterfreilaufs in Drehmitnahmeverbindung stehen kann, selbst wenn der Startvorgang bereits abgeschlossen ist und die Drehzahl der ersten Komponente deutlich höher als die Drehzahl der Starteinrichtung ist, zumal der Starterfreilauf in diesem Falle die Ausgangsseite von der Eingangsseite des Starterfreilaufs entkoppelt. So kann beispielsweise bei einer Starteinrichtung, die sich im Wesentlichen aus einem Startermotor und einem von der Startermotor antreibbaren Starterzahnrad zusammensetzt, auf ein Ein- oder Ausspuren des Starterzahnrades in eine entsprechende Verzahnung an der Eingangsseite des Starterfreilaufs entfallen.

Die vorstehend beschriebene Startanordnung, die einen Torsionsschwingungsdämpfer in vorteilhafter Weise mit einem Starterfreilauf kombiniert, hat sich bewährt, allerdings führen heutige Verbrennungsmotoren, bei denen die Tendenz zu einer höheren Aufladung und einer Verringerung der Anzahl an Zylindern geht, dazu, dass bei niedrigen Drehzahlen, wie sie insbesondere beim Startvorgang des Verbrennungsmotors auftreten, resonanzbedingte Probleme an dem Torsionsschwingungsdämpfer entstehen.

Es ist daher eine Aufgabe der vorliegenden Erfindung, eine Startanordnung für den Antriebsstrang eines Kraftfahrzeugs zu schaffen, die die resonanzbedingten Probleme eines Torsionsschwingungsdämpfers im niedrigen Drehzahlbereich, vorzugsweise im Drehzahl unterhalb der Leerlaufdrehzahl oder beim Startvorgang, verhindert und einen platzsparenden und einfachen Aufbau aufweist.

Die Lösung dieser Aufgabe wird durch die in Patentanspruch 1 angegebenen Merkmale gelöst. Vorteilhafte Ausführungsformen der Erfindung sind Gegenstand der Unteransprüche.

Die erfindungsgemäße Startanordnung ist für den Antriebsstrang eines Kraftfahrzeugs konzipiert, kann jedoch auch in anderen Antriebssträngen, in denen Verbrennungsmotoren vorgesehen sind, zum Einsatz kommen. Die Startanordnung weist einen Torsionsschwingungsdämpfer auf. Der Torsionsschwingungsdämpfer kann beispielsweise als sogenanntes Zweimassenschwungrad ausgebildet sein. Der Torsionsschwingungsdämpfer weist eine erste Komponente und eine zweite Komponente auf, die gegen den Widerstand einer Rückstelleinrichtung relativ zueinander verdreht werden können. So kann es sich bei der ersten Komponente beispielsweise um ein eingangsseitiges Primärelement oder eine eingangsseitige Primärmasse oder um ein ausgangsseitiges Sekundärelement oder eine ausgangsseitige Sekundärmasse des Torsionsschwingungsdämpfers handeln, während es sich bei der zweiten Komponente beispielsweise um ein ausgangsseitiges Sekundärelement oder eine ausgangsseitige Sekundärmasse oder um ein eingangsseitiges Primärelement oder eine eingangsseitige Primärmasse handeln kann. Bei der Rückstelleinrichtung, gegen deren Widerstand die erste und zweite Komponente relativ zueinander verdrehbar sind, kann es sich beispielsweise um eine Federeinrichtung oder um eine andere Energiespeichereinrichtung handeln, die geeignet ist, den sich relativ zueinander verdrehenden Komponenten den genannten Widerstand entgegenzusetzen. Darüber hinaus weist die Startanordnung einen Starterfreilauf auf. Der Starterfreilauf weist eine von einer Starteinrichtung antreibbare Eingangsseite und eine mit der ersten Komponente in Drehmitnahmeverbindung stehende oder bringbare Ausgangsseite auf. Bei dem Starterfreilauf kann es sich um einen herkömmlichen Freilauf handeln. So kann der Starterfreilauf beispielsweise in eine Sperrstellung überführt werden, wenn die Eingangsseite in der einen Drehrichtung relativ zu der Ausgangsseite verdreht wird, und in eine Öffnungsstellung überführt werden, wenn die Eingangsseite in der entgegengesetzten Drehrichtung relativ zu der Ausgangsseite verdreht wird. Zu diesem Zweck sind beispielsweise entsprechende Klemmkörper zwischen der Eingangsseite und der Ausgangsseite des Starterfreilaufs angeordnet, wobei die Klemmkörper vorzugsweise als Klemmrollen ausgebildet sind. Darüber hinaus weist die Startanordnung eine Kopplungseinrichtung auf. Über die Kopplungseinrichtung kann eine Drehbewegung der zweiten Komponente relativ zu der ersten Komponente in zumindest einer Umfangsrichtung des Torsionsschwingungsdämpfers behindert oder verhindert werden. Die Kopplungseinrichtung ist bei dieser Startanordnung über den Starterfreilauf aktuierbar oder aktivierbar, um die Drehbewegung der zweiten Komponente relativ zu der ersten Komponente in zumindest einer Umfangsrichtung, beispielsweise während des Startvorgangs, zu behindern oder zu verhindern. Dank der Kopplungseinrichtung können die erste und zweite Komponente bzw. deren Drehbewegungen relativ zueinander über die Kopplungseinrichtung somit in kritischen Drehzahlbereichen, die beispielsweise während des Startvorgangs des Kraftfahrzeugs bzw. des Verbrennungsmotors erreicht werden, miteinander gekoppelt werden, so dass Resonanzschwingungen im Bereich des Torsionsschwingungsdämpfers weitgehend unterdrückt oder verhindert werden können. So hat sich insbesondere gezeigt, dass sogenannte Starthänger, die das Starten des Verbrennungsmotors verhindern, durch die über den Starterfreilauf aktuierte oder aktivierte Kopplungseinrichtung vermieden werden können. Auch kann die Rückstelleinrichtung des Torsionsschwingungsdämpfers hierdurch gezielt für höhere Drehzahlen ausgelegt werden, zumal auf die gezielte Auslegung der Rückstelleinrichtung, wie beispielsweise der Federeinrichtung, für den niedrigen Drehzahlbereich beim Starten des Verbrennungsmotors verzichtet werden kann. Überdies ist ein besonders einfacher und platzsparender Aufbau erzielt, zumal die Aktuierung oder Aktivierung der Kopplungseinrichtung einfach über den Starterfreilauf oder zumindest ein Bestandteil des Starterfreilaufs, wie beispielsweise die Eingangsseite, die Ausgangsseite, einen Käfig für die Klemmkörper oder Ähnliches erfolgen kann. Mithin ist ein zusätzliches Aktuierungs- oder Aktivierungsglied oder gar eine vollständig separat ausgebildete Aktuierungs- oder Aktivierungseinrichtung für die Kopplungseinrichtung entbehrlich, die einen komplexen und störungsanfälligen Aufbau der Startanordnung bedingen würde. Nichtsdestotrotz kann die Aktuierung oder Aktivierung der Kopplungseinrichtung auch mittelbar über den Starterfreilauf erfolgen, beispielsweise über ein mit einem Bestandteil des Starterfreilaufs in Wirkverbindung stehendes Aktuierungs- oder Aktivierungsglied, wobei noch immer ein relativ einfacher Aufbau der Startanordnung gewährleistet ist.

In einer bevorzugten Ausführungsform der erfindungsgemäßen Startanordnung ist die Kopplungseinrichtung durch Antreiben der Eingangsseite des Starterfreilaufs aktuierbar oder aktivierbar. So können durch das Antreiben der Eingangsseite des Starterfreilaufs die Bestandteile des Starterfreilaufs in Bewegung oder/und Drehbewegung versetzt werden, wobei durch diese Bewegung oder Drehbewegung gleichermaßen die Kopplungseinrichtung aktuierbar oder aktivierbar ist. Mithin kann bei dieser Ausführungsform eine separate oder zusätzliche Aktuierungs- oder Aktivierungseinrichtung, wie beispielsweise ein zusätzlicher Antrieb, entfallen, was den Aufbau und die Funktionsweise der Startanordnung vereinfacht. Insbesondere ist hierdurch sichergestellt, dass die Kopplungseinrichtung stets aktuiert oder aktiviert wird, wenn der Startvorgang durch Antreiben der Eingangsseite des Starterfreilaufs durchgeführt wird, ohne dass eine aufwendige Steuerung zur Aktuierung oder Aktivierung der Kopplungseinrichtung erforderlich ist.

Wie bereits zuvor angedeutet, ist es von Vorteil, wenn die Aktuierung oder Aktivierung der Kopplungseinrichtung über zumindest einen Bestandteil des Starterfreilaufs erfolgt. So ist die Kopplungseinrichtung in einer weiteren bevorzugten Ausführungsform der erfindungsgemäßen Startanordnung über die Eingangsseite des Starterfreilaufs oder über die Ausgangsseite des Starterfreilaufs aktuierbar oder aktivierbar. Dabei hat sich eine Aktuierbarkeit oder Aktivierbarkeit der Kopplungseinrichtung über die Eingangsseite des Starterfreilaufs insofern als besonders vorteilhaft herausgestellt, als dass die Kopplungseinrichtung auf direkterem Wege aktuierbar oder aktivierbar ist, zumal etwaige Toleranzen im Bereich der Eingangs- und Ausgangsseite oder im Bereich der Klemmkörper unberücksichtigt bleiben können. Eine Aktuierung oder Aktivierung der Kopplungseinrichtung über die Ausgangsseite des Starterfreilaufs kann jedoch ebenfalls von Vorteil sein, wenn dies bauraumbedingt erforderlich ist.

In einer besonders bevorzugten Ausführungsform der erfindungsgemäßen Startanordnung weist die Kopplungseinrichtung einen Kopplungsfreilauf auf, der eine mit der Eingangsseite des Starterfreilaufs in Drehmitnahmeverbindung stehende oder von der Eingangsseite des Starterfreilaufs gebildete Eingangsseite und eine mit der zweiten Komponente in Drehmitnahmeverbindung stehende Ausgangsseite aufweist. Der Kopplungsfreilauf kann wiederum wie ein herkömmlicher Freilauf ausgebildet sein, wobei bezüglich des beispielhaften Aufbaus des Kopplungsfreilaufs auf die vorangehende Beschreibung des Starterfreilaufs verwiesen sei. So ist es bei dieser Ausführungsform insbesondere bevorzugt, wenn der Starterfreilauf und der Kopplungsfreilauf baugleich oder gar identisch ausgebildet sind. Wie aus der vorangehenden Beschreibung ersichtlich, erfolgt bei dieser Ausführungsform die Aktuierung oder Aktivierung der Kopplungseinrichtung über die Eingangsseite des Starterfreilaufs. Sinngemäß ist durch diese Ausführungsform eine Startanordnung geschaffen, bei der beide Komponenten des Torsionsschwingungsdämpfers vermittels des Starter- und Kopplungsfreilaufes durch eine Starteinrichtung antreibbar sind, indem die Eingangsseite des Starterfreilaufs, die mit der Eingangsseite des Kopplungsfreilaufes in Drehmitnahmeverbindung steht oder die Eingangsseite des Kopplungsfreilaufes ausbildet, angetrieben wird. In jedem Fall ermöglicht die Startanordnung, die einen Starterfreilauf mit einem Kopplungsfreilauf kombiniert, einen besonders einfachen und platzsparenden Aufbau, wobei insbesondere eine in axialer Richtung kurzbauende Bauweise erzielt werden kann.

In einer vorteilhaften Ausführungsform der erfindungsgemäßen Startanordnung sind der Starterfreilauf und der Kopplungsfreilauf derart ausgebildet, dass diese in die Sperrstellung gelangen, wenn die Eingangsseite in der einen Drehrichtung relativ zu der Ausgangsseite verdreht wird, während der Starterfreilauf und der Kopplungsfreilauf in die Öffnungsstellung gelangen, wenn die Eingangsseite in der entgegengesetzten Drehrichtung relativ zu der Ausgangsseite verdreht wird. Man kann hierbei auch von einer Gleichwirkung zwischen dem Starterfreilauf und dem Kopplungsfreilauf sprechen.

In einer weiteren bevorzugten Ausführungsform der erfindungsgemäßen Startanordnung sind der Starterfreilauf und der Kopplungsfreilauf in axialer Richtung hintereinander, gegebenenfalls in axialer Richtung miteinander fluchtend, angeordnet. Dies ist insbesondere dann von Vorteil, wenn ein in radialer Richtung kurzbauender Torsionsschwingungsdämpfer geschaffen werden soll, bei dem überdies ein möglichst kurzer Drehmomentübertragungsweg zwischen den Eingangsseiten der beiden Freiläufe erzielt werden kann. Um hierbei dennoch auch eine kurze axiale Baulänge der Startanordnung bzw. des Torsionsschwingungsdämpfers zu erreichen, ist die Rückstelleinrichtung vorzugsweise in radialer Richtung zu dem Starter- oder Kopplungsfreilauf versetzt, vorzugsweise von dem Starter- oder/und Kopplungsfreilauf in radialer Richtung beabstandet, besonders bevorzugt mit dem Starter- oder/und Kopplungsfreilauf in radialer Richtung geschachtelt, angeordnet.

Um eine besonders kurze axiale Baulänge des Torsionsschwingungsdämpfers und mithin der gesamten Startanordnung zu erzielen, sind der Starterfreilauf und der Kopplungsfreilauf in einer weiteren bevorzugten Ausführungsform der erfindungsgemäßen Startanordnung in radialer Richtung zueinander versetzt, vorzugsweise in radialer Richtung voneinander beabstandet, besonders bevorzugt in radialer Richtung geschachtelt, angeordnet. Um auch bei dieser Ausführungsform eine noch geringere axiale Baulänge der Startanordnung erzielen zu können, ist es bevorzugt, wenn die Rückstelleinrichtung mit dem Starterfreilauf oder dem Kopplungsfreilauf, gegebenenfalls dem Starter- und Kopplungsfreilauf, radial geschachtelt angeordnet ist.

In einer besonders vorteilhaften Ausführungsform der erfindungsgemäßen Startanordnung wirkt die Kopplungseinrichtung mit der Ausgangsseite des Starterfreilaufs zusammen, so dass bei dieser Ausführungsform die Kopplungseinrichtung über die Ausgangsseite des Starterfreilaufs aktuierbar oder aktivierbar ist. Die Ausgangsseite des Starterfreilaufs ist bei dieser Ausführungsform in einem vorbestimmten Drehwinkelbereich relativ zu der ersten Komponente von einer ersten Drehstellung in eine zweite Drehstellung verdrehbar, in der die erste und zweite Komponente über die Kopplungseinrichtung miteinander gekoppelt sind. Dabei erfolgt die Kopplung vorzugsweise form- oder/und kraft- oder/und reibschlüssig. Bei dieser Ausführungsform kann also zunächst die Eingangsseite des Starterfreilaufs durch eine Starteinrichtung angetrieben werden, so dass der Starterfreilauf in der Klemmstellung über die Klemmkörper mit der Ausgangsseite des Starterfreilaufs in Drehmitnahmeverbindung gebracht wird, woraufhin zunächst die Ausgangsseite des Starterfreilaufs von der ersten Drehstellung relativ zu der ersten Komponente in die zweite Drehstellung verdreht wird und die Kopplungseinrichtung aktuiert oder aktiviert, um schon beim Verdrehen oder nach Erreichen der zweiten Drehstellung die erste Komponente in Drehung zu versetzen. Bei dem vorbestimmten Drehwinkelbereich kann es sich um einen relativ kleinen Drehwinkelbereich handeln, der beispielsweise maximal 15°, maximal 10° oder maximal 5° betragen kann.

In einer weiteren vorteilhaften Ausführungsform der erfindungsgemäßen Startanordnung, die auf der vorangehend beschriebenen Ausführungsform basiert, ist die Kopplungseinrichtung durch Verdrehen der Ausgangsseite des Starterfreilaufs relativ zu der ersten Komponente in axialer Richtung aktuierbar oder aktivierbar ist. So kann beispielsweise eine Drehbewegung der Ausgangsseite des Starterfreilaufs in eine Axialbewegung zumindest eines Teils der Kopplungseinrichtung umgesetzt werden, um hierdurch die Aktivierung oder Aktuierung der Kopplungseinrichtung zu vereinfachen.

In einer weiteren vorteilhaften Ausführungsform der erfindungsgemäßen Startanordnung ist eine Zwangsführung zur Umsetzung der Drehbewegung der Ausgangsseite des Starterfreilaufs in eine Axialbewegung der Kopplungseinrichtung vorgesehen ist. Die Zwangsführung kann beispielsweise zwischen der Ausgangsseite des Starterfreilaufs und der Kopplungseinrichtung wirken. Ebenso ist es möglich, dass eine Zwangsführung zwischen der ersten Komponente und der Ausgangsseite des Starterfreilaufs selbst wirkt, um bereits eine Axialbewegung oder -verschiebung der Ausgangsseite des Starterfreilaufs zu bewirken, die dann ihrerseits mit der Kopplungseinrichtung zusammenwirkt.

In einer weiteren vorteilhaften Ausführungsform der erfindungsgemäßen Startanordnung ist die Zwangsführung als Rampenanordnung ausgebildet, um eine einfach und sichere Umsetzung der Drehbewegung der Ausgangsseite des Starterfreilaufs in eine Axialbewegung, -aktuierung oder -aktivierung zu erzielen.

Um die Kopplung der ersten und zweiten Komponente über die Kopplungseinrichtung sicher und schnell nach erfolgtem Start wieder aufheben oder zumindest verringern zu können, ist die Ausgangsseite des Starterfreilaufs in einer weiteren bevorzugten Ausführungsform der erfindungsgemäßen Startanordnung in die zuvor erwähnte erste Drehstellung vorgespannt. Hierbei ist es bevorzugt, wenn die Vorspannung über eine Federeinrichtung oder eine ähnliche Energiespeichereinrichtung realisiert ist.

In einer weiteren vorteilhaften Ausführungsform der erfindungsgemäßen Startanordnung weist die Eingangsseite des Starterfreilaufs einen Innenring auf, während die Ausgangsseite des Starterfreilaufs einen Außenring aufweist, wobei zwischen dem Innenring und dem Außenring des Starterfreilaufs Klemmkörper des Starterfreilaufs angeordnet sind. Bei den Klemmkörpern handelt es sich vorzugsweise um Klemmrollen, die besonders bevorzugt zylindrisch ausgebildet sind. Überdies ist es bevorzugt, wenn die zylindrischen Klemmrollen münzenartig ausgebildet sind oder/und einen Durchmesser aufweisen, der vorzugsweise größer als die Breite der Klemmrolle ausgebildet ist.

Alternativ oder ergänzend zu der vorangehend beschriebenen Ausführungsform weist die Eingangsseite des Kopplungsfreilaufs in einer weiteren vorteilhaften Ausführungsform der erfindungsgemäßen Startanordnung einen Innenring auf, während die Ausgangsseite des Kopplungsfreilaufs einen Außenring aufweist, wobei zwischen dem Innenring und dem Außenring des Kopplungsfreilaufs Klemmkörper des Kopplungsfreilaufs angeordnet sind. Bei den Klemmkörpern handelt es sich wiederum vorzugsweise um Klemmrollen, die besonders bevorzugt zylindrisch ausgebildet sind. Auch hat es sich als vorteilhaft erwiesen, wenn die Klemmrollen einen Durchmesser aufweisen, der größer als die Breite der Klemmrollen ausgebildet ist, um eine besonders kurze axiale Baulänge zu erzielen.

In einer weiteren vorteilhaften Ausführungsform der erfindungsgemäßen Startanordnung weist die Eingangsseite des Starterfreilaufs eine Drehmitnahmekontur auf, über die die Eingangsseite des Starterfreilaufs mit einer Starteinrichtung in Drehmitnahmeverbindung bringbar oder gebracht ist. Bei der Drehmitnahmekontur kann es sich um jedwede Kontur handeln, mittels derer eine Drehmitnahmeverbindung mit der Starteinrichtung herstellbar ist, also beispielsweise auch eine Drehmitnahmekontur zum Anlegen eines Riemens oder einer Kette eines Riemen- bzw. Kettentriebs. Bei dieser Ausführungsform ist es bevorzugt, wenn die Drehmitnahmekontur als Verzahnung, besonders bevorzugt als Außenverzahnung, ausgebildet ist, um eine schlupffreie und sichere Drehmitnahmeverbindung zu schaffen und - im Falle einer Außenverzahnung - eine möglichst weit außenliegende Anordnung der zu verwendenden Starteinrichtung zu ermöglichen.

In einer weiteren bevorzugten Ausführungsform der erfindungsgemäßen Startanordnung weist die Eingangsseite des Starterfreilaufs ein sich im Wesentlichen in radialer Richtung erstreckenden Radialabschnitt auf, an dem die Drehmitnahmekontur angeordnet ist. Bei dieser Ausführungsform ist es bevorzugt, wenn der Radialabschnitt die Drehmitnahmekontur mit dem Innenring verbindet. Der Radialabschnitt ermöglicht somit eine relativ weit in radialer Richtung außen gelegene Anordnung einer Starteinrichtung. Dies ist insbesondere dann von Vorteil, wenn hierüber der Innenring der Eingangsseite des Starterfreilaufs angetrieben werden soll. Dank dieser Anordnung einer Starteinrichtung muss die Starteinrichtung nicht zu einer größeren axialen Baulänge des Antriebsstrangs beitragen. Der sich im Wesentlichen in radialer Richtung erstreckende Radialabschnitt ist hierbei vorzugsweise von einem Blechteil gebildet, um eine geringe axiale Ausdehnung desselben sicherzustellen und gleichermaßen eine sichere Drehmomentübertragung über den Radialabschnitt zu erzielen.

In einer weiteren vorteilhaften Ausführungsform der erfindungsgemäßen Startanordnung ist der zuvor erwähnte Radialabschnitt in axialer Richtung zwischen der ersten und zweiten Komponente angeordnet. Dies ist insbesondere dann von Vorteil, wenn bezogen auf die axiale Richtung eine besonders zentrale Anordnung der Drehmitnahmekontur der Eingangsseite des Starterfreilaufs bezüglich des Torsionsschwingungsdämpfers erzielt werden soll.

In einer weiteren vorteilhaften Ausführungsform der erfindungsgemäßen Startanordnung ist der zuvor erwähnte Radialabschnitt der Eingangsseite des Starterfreilaufs in axialer Richtung vor oder hinter den beiden Komponenten angeordnet. Dies ist insbesondere dann von Vorteil, wenn beabsichtigt ist, die Eingangsseite des Starterfreilaufs an einem feststehenden Bauteil der Startanordnung oder des Antriebsstrangs in radialer Richtung oder/und axialer Richtung abzustützen.

In einer weiteren besonders bevorzugten Ausführungsform der erfindungsgemäßen Startanordnung ist die Eingangsseite des Starterfreilaufs oder/und des Kopplungsfreilaufs in radialer oder/und axialer Richtung an einem feststehenden Bauteil, vorzugsweise an einem Gehäuse, wie beispielsweise einem Verbrennungsmotorgehäuse oder Getriebegehäuse, abstützbar oder abgestützt. Dies ist im Gegensatz zu einer Abstützung an einem rotierenden Bauteil, wie beispielsweise der ersten oder/und zweiten Komponente, insofern von Vorteil, als dass die Reibung zwischen der Eingangsseite des Starterfreilaufs oder/und des Kopplungsfreilaufs und dem Torsionsschwingungsdämpfer nach erfolgtem Start geringer ist.

In einer weiteren vorteilhaften Ausführungsform der erfindungsgemäßen Startanordnung, bei der sowohl ein Starterfreilauf als auch ein Kopplungsfreilauf vorgesehen ist, sind die Eingangsseiten des Starterfreilaufs und des Kopplungsfreilaufs über ein gemeinsames Lager oder Gleitlager an dem feststehenden Bauteil, beispielsweise dem zuvor erwähnten Gehäuse, abstützbar oder abgestützt.

Alternativ oder ergänzend zu den vorangehend beschriebenen Ausführungsformen der Startanordnung, bei denen die Abstützung der Eingangsseite des Starterfreilaufs oder/und des Kopplungsfreilaufs in radialer oder/und axialer Richtung an einem feststehenden Bauteil erfolgt, ist die Eingangsseite des Starterfreilaufs oder/und des Kopplungsfreilaufs in einer weiteren vorteilhaften Ausführungsform der erfindungsgemäßen Startanordnung in radialer oder/und axialer Richtung an der ersten oder/und zweiten Komponente, vorzugsweise über ein Gleitlager, abstützbar oder abgestützt. Wenngleich - wie bereits vorangehend erwähnt - hierdurch eine größere Reibung zwischen der Eingangsseite des Starterfreilaufs oder/und des Kopplungsfreilaufes und der ersten oder/und zweiten Komponente auch noch nach erfolgtem Start relativ groß ist, so hat diese Ausführungsform jedoch den Vorteil, dass ein kompakter Aufbau des Torsionsschwingungsdämpfers in Verbindung mit den beiden Freiläufen erzielt werden kann, zumal lediglich kleine oder kurzbauende Stützabschnitte an der Eingangsseite des Starterfreilaufs oder/und des Kopplungsfreilaufes vorgesehen sein müssen, um die Abstützbarkeit oder Abstützung in radialer oder/und axialer Richtung an der benachbarten ersten oder/und zweiten Komponente zu erreichen. Auch kann eine Modifikation oder Ergänzung des zuvor erwähnten feststehenden Bauteils oder Gehäuses bei dieser Ausführungsform gänzlich oder teilweise entfallen.

Während die vorangehend beschriebenen Ausführungsformen der Startanordnung zwar derart ausgelegt sind, dass die Eingangsseite des Starterfreilaufs von einer Starteinrichtung antreibbar ist, jedoch die Starteinrichtung kein zwingender Bestandteil der Startanordnungen ist, so weist die Startanordnung in einer weiteren vorteilhaften Ausführungsform derselben eine Starteinrichtung zum Antreiben der Eingangsseite des Starterfreilaufs auf. Die Starteinrichtung kann beispielsweise einen Startermotor und eine von dem Startermotor in Drehung versetzbare Drehmomentübertragungseinrichtung aufweisen, wobei die Drehmomentübertragungseinrichtung mit der Eingangsseite des Starterfreilaufs in Drehmitnahmeverbindung stehen oder gebracht werden kann.

Der besondere Vorteil des Starterfreilaufs besteht darin, dass die Starteinrichtung nach dem Startvorgang nicht wieder von der Eingangsseite des Starterfreilaufs entkoppelt werden muss. Aus diesem Grunde steht eine Ausgangsseite der Starteinrichtung in einer weiteren bevorzugten Ausführungsform der erfindungsgemäßen Startanordnung permanent mit der Eingangsseite des Starterfreilaufs in Drehmitnahmeverbindung. Hierbei wird häufig auch von einer permanent eingespurten Starteinrichtung gesprochen.

In einer weiteren vorteilhaften Ausführungsform der erfindungsgemäßen Startanordnung weist die Ausgangsseite der Starteinrichtung ein Starterzahnrad auf, das permanent mit der Verzahnung der Eingangsseite des Starterfreilaufs in Drehmitnahmeeingriff steht. Bei dem Starterzahnrad, das auch als Starterritzel bezeichnet werden könnte, handelt es sich vorzugsweise um die zuvor erwähnte Drehmomentübertragungseinrichtung, die durch einen Startmotor der Starteinrichtung antreibbar oder in Drehung versetzbar ist.

In einer weiteren vorteilhaften Ausführungsform der erfindungsgemäßen Startanordnung ist die erste oder zweite Komponente des Torsionsschwingungsdämpfers mit einer Ausgangsseite eines Verbrennungsmotors, vorzugsweise einer Antriebswelle des Verbrennungsmotors, drehfest verbindbar oder verbunden. So kann die erste oder zweite Komponente des Torsionsschwingungsdämpfers in dieser Ausführungsform der Startanordnung beispielsweise das eingangsseitige Primärelement oder die eingangsseitige Primärschwungmasse aus. Demgegenüber kann die zweite oder erste Komponente, also die andere Komponente, das ausgangsseitige Sekundärelement oder die ausgangsseitige Sekundärschwungmasse des Torsionsschwingungsdämpfers ausbilden, wobei das ausgangsseitige Sekundärelement oder die ausgangsseitige Sekundärschwungmasse entweder im Kraft- oder Drehmomentübertragungsweg eines Antriebsstrangs angeordnet oder auch als freie Schwungmasse ausgebildet sein könnte.

In einer weiteren vorteilhaften Ausführungsform der erfindungsgemäßen Startanordnung ist diejenige der Komponenten, die nicht mit der Ausgangsseite des Verbrennungsmotors drehfest verbindbar oder verbunden ist oder in Drehmitnahmeverbindung bringbar ist oder steht, derart ausgebildet, dass diese mit einer Eingangsseite eines Getriebes oder einer Kupplungseinrichtung drehfest verbindbar oder verbunden ist oder in Drehmitnahmeverbindung bringbar ist oder steht.

Die Erfindung wird im Folgenden anhand beispielhafter Ausführungsformen unter Bezugnahme auf die beigefügten Zeichnungen näher erläutert. Es zeigen:
- Fig. 1: eine teilweise Seitenansicht einer ersten Ausführungsform der erfindungsgemäßen Startanordnung,
- Fig. 2: eine Draufsicht auf die Schnittlinie A-A oder B-B aus Fig. 1 mit dem jeweiligen Freilauf in der Klemmstellung,
- Fig. 3: die Darstellung von Fig. 2 mit dem jeweiligen Freilauf in der Öffnungsstellung,
- Fig. 4: eine teilweise Seitenansicht einer zweiten Ausführungsform der erfindungsgemäßen Startanordnung in geschnittener Darstellung,
- Fig. 5: eine teilweise Seitenansicht einer dritten Ausführungsform der erfindungsgemäßen Startanordnung in geschnittener Darstellung,
- Fig. 6: eine teilweise Seitenansicht einer vierten Ausführungsform der erfindungsgemäßen Startanordnung in geschnittener Darstellung,
- Fig. 7: eine Draufsicht auf die Schnittlinie C-C aus Fig. 6 mit der Ausgangsseite des Starterfreilaufs in einer ersten Drehstellung,
- Fig. 8: die Darstellung aus Fig. 7 mit der Ausgangsseite des Starterfreilaufs in einer zweiten Drehstellung,
- Fig. 9: eine teilweise Seitenansicht einer fünften Ausführungsform der erfindungsgemäßen Startanordnung mit der Ausgangsseite des Starterfreilaufs in einer ersten Drehstellung und
- Fig. 10: die Startanordnung von Fig. 9 mit der Ausgangsseite des Starterfreilaufs in einer zweiten Drehstellung.

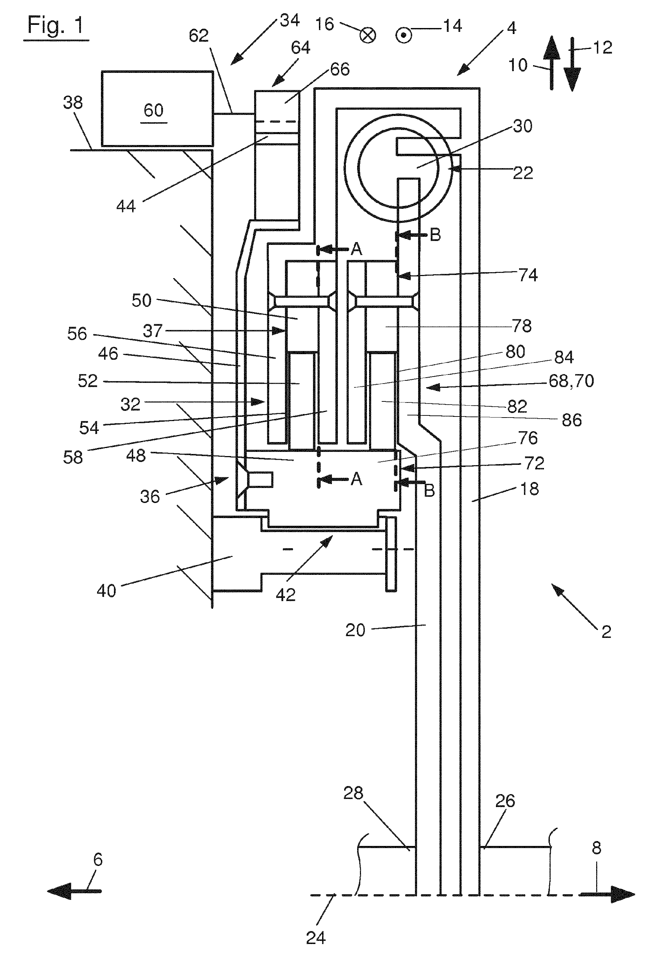

Die Fig. 1 bis 3 zeigen eine erste Ausführungsform einer Startanordnung 2 für den Antriebsstrang eines Kraftfahrzeugs. Die Startanordnung 2 weist einen Torsionsschwingungsdämpfer 4 auf, der innerhalb des Antriebsstrangs des Kraftfahrzeugs angeordnet ist oder werden soll, wobei der Torsionsschwingungsdämpfer 4 beispielsweise als Zweimassenschwungrad ausgebildet sein kann. In den Figuren sind die einander entgegengesetzten axialen Richtungen 6, 8, die einander entgegengesetzten radialen Richtungen 10, 12 und die einander entgegengesetzten Umfangsrichtungen 14, 16 des Torsionsschwingungsdämpfers 4 anhand entsprechender Pfeile angedeutet.

Der Torsionsschwingungsdämpfer 4 weist eine erste Komponente 18 und eine zweite Komponente 20 auf. Die erste Komponente 18 und die zweite Komponente 20 des Torsionsschwingungsdämpfers 4 sind gegen den Widerstand einer Rückstelleinrichtung 22 in den Umfangsrichtungen 14, 16 um eine sich in den axialen Richtungen 6, 8 erstreckende Drehachse 24 relativ zueinander verdrehbar. Wie aus den Figuren ersichtlich, sind die Komponenten 18 und 20 dabei um dieselbe Drehachse 24 verdrehbar, so dass auch von einer koaxialen Anordnung oder Verdrehbarkeit der Komponenten 18, 20 gesprochen werden kann.

Bei der ersten Komponente 18 kann es sich in einer Ausführungsvariante um das eingangsseitige Primärelement oder die eingangsseitige Primärschwungmasse des Torsionsschwingungsdämpfers 4 handeln, die mit einer Ausgangsseite eines Verbrennungsmotors, vorzugsweise einer Antriebswelle des Verbrennungsmotors, drehfest verbindbar oder verbunden ist oder in Drehmitnahmeverbindung bringbar ist oder steht, während die zweite Komponente 20 das ausgangsseitige Sekundärelement oder die ausgangsseitige Sekundärschwungmasse des Torsionsschwingungsdämpfers 4 ausbilden kann. Umgekehrt kann in einer zweiten Ausführungsvariante die zweite Komponente 20 das eingangsseitige Primärelement oder die eingangsseitige Primärschwungmasse des Torsionsschwingungsdämpfers 4 ausbilden, die mit einer Ausgangsseite eines Verbrennungsmotors, vorzugsweise einer Antriebswelle des Verbrennungsmotors, drehfest verbindbar oder verbunden ist oder in Drehmitnahmeverbindung bringbar ist oder steht, während die erste Komponente 18 das ausgangsseitige Sekundärelement oder die ausgangsseitige Sekundärschwungmasse des Torsionsschwingungsdämpfers 4 ausbilden kann. Unabhängig von der jeweils gewählten Ausführungsvariante ist diejenige der beiden Komponenten 18, 20, die das ausgangsseitige Sekundärelement oder die ausgangsseitige Sekundärschwungmasse des Torsionsschwingungsdämpfers 4 bildet, innerhalb des Antriebsstrangs vorzugsweise mit einer Eingangsseite eines Getriebes oder einer Kupplungseinrichtung drehfest verbindbar oder verbunden oder in Drehmitnahmeverbindung bringbar oder stehend. Die jeweilige Anbindung an die erste Komponente 18 bzw. die zweite Komponente 20 ist in Fig. 1 anhand der Bezugszeichen 26 bzw. 28 angedeutet.

Bei der zuvor erwähnten Rückstelleinrichtung 22 kann es sich um jedwede Rückstelleinrichtung handeln, die geeignet ist, einer Verdrehung der beiden Komponenten 18, 20 relativ zueinander entgegenzuwirken, wobei es sich bei der Rückstelleinrichtung 22 vorzugsweise um eine Federeinrichtung oder eine Energiespeichereinrichtung handelt, die die beiden Komponenten 18, 20 besonders bevorzugt drehelastisch miteinander koppelt. Im Falle einer Rückstelleinrichtung 22 in Form einer Federeinrichtung weist die Federeinrichtung vorzugsweise eine oder mehrere Schraubenfedern auf, wobei die Schraubenfedern besonders bevorzugt als sogenannte Bogenfedern ausgebildet sind, deren Federlängsachse sich bogenförmig in den Umfangsrichtungen 14, 16 erstreckt. Innerhalb des Antriebsstrangs ist der Torsionsschwingungsdämpfer 4 entweder in einem Nassraum oder in einem Trockenraum angeordnet. Wie aus Fig. 1 ferner ersichtlich, ist die Rückstelleinrichtung 22 in einem Aufnahmeraum 30 aufgenommen, der von einer der Komponenten 18, 20, hier der ersten Komponente 18, umgeben ist, während die andere Komponente 20, 18, hier die zweite Komponente 20, in den Aufnahmeraum 30 hineinragt. Überdies sind in Fig. 1 die in den Aufnahmeraum 30 ragenden und mit der Rückstelleinrichtung 22 zusammenwirkenden Drehmitnehmer an der ersten und zweiten Komponente 18, 20 angedeutet (kein Bezugszeichen).

Darüber hinaus weist die Startanordnung 2 einen Starterfreilauf 32 auf. Der Starterfreilauf 32 weist eine von einer Starteinrichtung 34 antreibbare Eingangsseite 36 und eine mit der ersten Komponente 18 in Drehmitnahmeverbindung stehende oder bringbare Ausgangsseite 37 auf. Die Eingangsseite 36 des Starterfreilaufs 32 ist in radialer Richtung 10, 12 und in axialer Richtung 6, 8 an einem feststehenden Bauteil 38, vorzugsweise einem Gehäuse, bei dem es sich beispielsweise um ein Getriebegehäuse oder Verbrennungsmotorgehäuse handeln kann, abgestützt. Die Abstützung an dem Gehäuse kann hierbei unmittelbar oder - wie in Fig. 1 gezeigt - mittelbar über ein Stützteil 42 erfolgen, das an dem feststehenden Bauteil 38 befestigt ist. Die Lagerung in radialer Richtung 10, 12 oder/und in axialer Richtung 6, 8 erfolgt hierbei vorzugsweise über das in Fig. 1 angedeutete Gleitlager 42.

Die Eingangsseite 36 des Starterfreilaufs 32 weist ferner eine Drehmitnahmekontur 44 auf, die an der in radialer Richtung 10 nach außen weisenden Seite der Eingangsseite 36 ausgebildet ist, wobei die Drehmitnahmekontur 44 in der dargestellten Ausführungsform von einer Verzahnung, genauer gesagt einer Außenverzahnung, gebildet ist. Die Eingangsseite 36 des Starterfreilaufs 32 ist über die genannte Drehmitnahmekontur 44 mit der Starteinrichtung 34 in Drehmitnahmeverbindung bringbar oder gebracht.

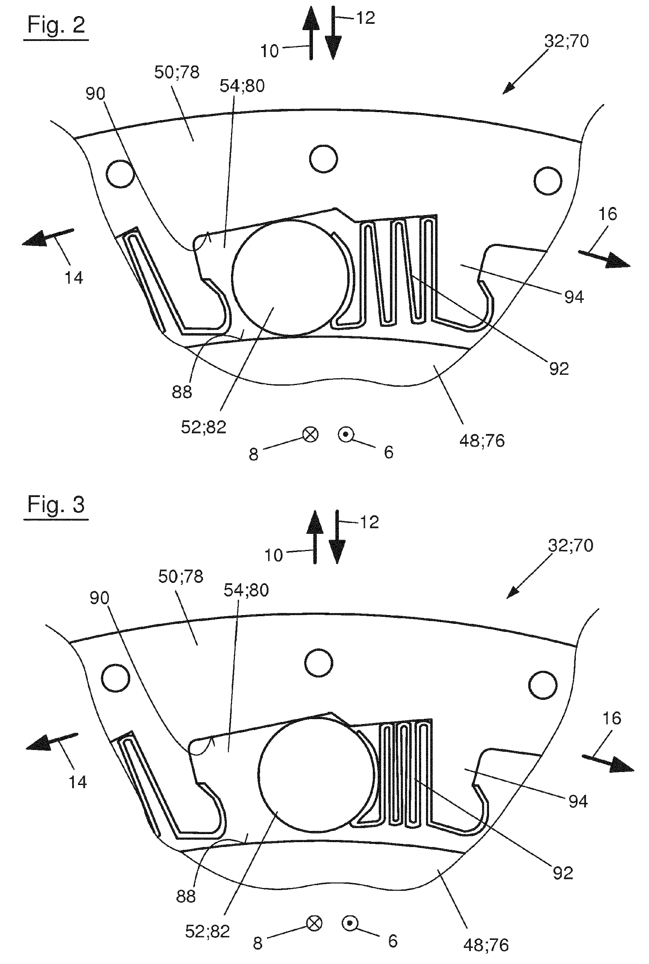

Die Eingangsseite 36 des Starterfreilaufs 32 weist ferner einen sich im Wesentlichen in radialer Richtung 10, 12 erstreckenden Radialabschnitt 46 auf, der sich ausgehend von der Drehmitnahmekontur 44 in radialer Richtung 12 nach innen erstreckt, um die Drehmitnahmekontur 44 mit einem Innenring 48 der Eingangsseite 36 des Starterfreilaufs 32 zu verbinden. Die Ausgangsseite 37 des Starterfreilaufs 32 weist hingegen einen Außenring 50 auf oder ist von dem Außenring 50 gebildet, wobei der Außenring 50 den Innenring 48 in radialer Richtung 10 außen umgibt. In radialer Richtung 10, 12 zwischen dem Innenring 48 und dem Außenring 50 sind mehrere Klemmkörper 52 vorgesehen, die in der dargestellten Ausführungsform als Klemmrollen, genauer gesagt zylindrische Klemmrollen, ausgebildet sind, deren Durchmesser größer als die Breite der Klemmkörper 52 in axialer Richtung 6, 8 ist. Man könnte hier auch von münzförmigen Klemmkörpern 52 sprechen. Der zwischen dem Innenring und dem Außenring 48, 50 ausgebildete Klemmspalt 54 ist in den axialen Richtungen 6, 8 begrenzt, wobei der Klemmspalt 54 in der axialen Richtung 6 durch einen Abschnitt 56 der ersten Komponente 18 und in der entgegengesetzten axialen Richtung 8 durch eine Begrenzungswand 58 begrenzt ist, die drehfest an der ersten Komponente 18 angebracht ist, hier vermittels des Außenrings 50. Auf die Funktionsweise des Starterfreilaufs 32 sowie weitere Merkmale desselben soll später nochmals näher unter Bezugnahme auf die Fig. 2 und 3 eingegangen werden.

Wie bereits vorangehend erwähnt, ist die Eingangsseite 36 des Starterfreilaufs 32 von einer Starteinrichtung 34 antreibbar. Die Starteinrichtung 34 weist einen Startermotor 60, bei dem es sich beispielsweise um einen Elektromotor handeln kann und mittels dessen eine Starterwelle 62 angetrieben werden kann, an der eine Ausgangsseite 64 der Starteinrichtung 34 befestigt ist, wobei die Ausgangsseite 64 eine Drehmomentübertragungseinrichtung ausbildet, die in der dargestellten Ausführungsform ein Starterzahnrad 66 aufweist oder von diesem gebildet ist. Die Ausgangsseite 64 der Starteinrichtung 34 steht permanent mit der Eingangsseite 36 des Starterfreilaufs 32 in Drehmitnahmeverbindung, wobei in der dargestellten Ausführungsform das Starterzahnrad 66 permanent mit der Drehmitnahmekontur 44 in Form der Verzahnung oder Außenverzahnung der Eingangsseite 36 des Starterfreilaufs 32 in Drehmitnahmeeingriff steht. Bei einer solchen Ausführungsform wird auch davon gesprochen, dass ein permanent eingespurter Starter vorgesehen ist.

Darüber hinaus weist die Startanordnung 2 eine Kopplungseinrichtung 68 auf, über die eine Drehbewegung der zweiten Komponente 20 relativ zu der ersten Komponente 18 in zumindest einer der Umfangsrichtungen 14, 16 - hier der Umfangsrichtung 16 - behinderbar oder verhinderbar ist, wobei die Kopplungseinrichtung 68 in der ersten Ausführungsform von einem Kopplungsfreilauf 70 gebildet ist, dessen Aufbau nachstehend näher beschrieben werden soll.

Der Kopplungsfreilauf 70 weist eine Eingangsseite 72 und eine mit der zweiten Komponente 20 in Drehmitnahmeverbindung stehende bzw. drehfest verbundene Ausgangsseite 74 auf. Dabei ist die Eingangsseite 72 des Kopplungsfreilaufs 70 im Wesentlichen von einem Innenring 76 gebildet, während die Ausgangsseite 74 des Kopplungsfreilaufs 70 im Wesentlichen von einem Außenring 78 gebildet ist, der den Innenring 76 in radialer Richtung 10 außen umgibt und drehfest mit der zweiten Komponente 20 verbunden ist. Zwischen dem Innen- und Außenring 76, 78 ist wiederum ein Klemmspalt 80 ausgebildet, in dem Klemmkörper 82 des Kopplungsfreilaufes 70 angeordnet sind. Für die Klemmkörper 82 gelten die Ausführungen zu den Klemmkörpern 52 des Starterfreilaufs 32 in entsprechender Weise, wobei auch der Klemmspalt 80 in der einen axialen Richtung 6, 8, hier der axialen Richtung 6, durch eine Begrenzungswand 84 und in der anderen axialen Richtung 8, 6, hier der axialen Richtung 8, durch einen Abschnitt 86 der zweiten Komponente 20 begrenzt ist. Die Begrenzungswand 84 sowie die Begrenzungswand 58 wurden nachträglich an der jeweiligen Komponente 20 bzw. 18 befestigt, während die Abschnitte 86 und 56 einstückig mit der jeweiligen Komponente 20 bzw. 18 ausgebildet sind.

Die Kopplungseinrichtung 68 - hier in Form des Kopplungsfreilaufes 70 - ist über den Starterfreilauf 32 oder zumindest ein Bestandteil desselben aktuierbar oder aktivierbar. In der dargestellten Ausführungsform erfolgt die Aktuierung oder Aktivierung über die Eingangsseite 36 des Starterfreilaufs 32, genauer gesagt über den Innenring 48 der Eingangsseite 36 des Starterfreilaufs 32. Zu diesem Zweck steht die Eingangsseite 36 des Starterfreilaufs 32 mit der Eingangsseite 72 des Kopplungsfreilaufes 70 in Drehmitnahmeverbindung, wobei in der dargestellten Ausführungsform sinngemäß die Eingangsseite 36 des Starterfreilaufs 32 gleichermaßen die Eingangsseite 72 des Kopplungsfreilaufes 70 bildet. In der dargestellten Ausführungsform ist dies dadurch bewirkt, dass der Innenring 48 der Eingangsseite 36 des Starterfreilaufs 32 einstückig mit dem Innenring 76 der Eingangsseite 72 des Kopplungsfreilaufs 70 ausgebildet ist, so dass diese sinngemäß einen gemeinsamen Innenring aufweisen. Alternativ wäre es jedoch ebenso denkbar, die beiden Innenringe 48, 76 separat voneinander auszubilden und, beispielsweise über einen Verbindungsring, eine Drehmitnahmeverbindung oder drehfeste Verbindung zwischen den Innenringen 48 und 76 zu erzielen.

Auch die Eingangsseite 72 des Kopplungsfreilaufes 70 ist in radialer oder/und axialer Richtung 10, 12; 6, 8 an einem feststehenden Bauteil, vorzugsweise einem Gehäuse, abstützbar oder abgestützt, wobei die Abstützung hier ebenfalls an dem bereits zuvor erwähnten feststehenden Bauteil 38 erfolgt. Dabei ist es bevorzugt, wenn die Eingangsseiten 36, 72 des Starterfreilaufs 32 und des Kopplungsfreilaufs 70 über ein gemeinsames Lager oder Gleitlager 42 an dem feststehenden Bauteil 38 abstützbar oder abgestützt sind, wie dies in Fig. 1 gezeigt ist.

Wie aus Fig. 1 ersichtlich, sind der Starterfreilauf 32 und der Kopplungsfreilauf 70 in axialer Richtung 6, 8 hintereinander, genauer gesagt in axialer Richtung 6, 8 miteinander fluchtend, angeordnet. Genauer gesagt sind der Starterfreilauf 32 und der Kopplungsfreilauf 70 derart angeordnet, dass die zwischen dem Innenring 48 bzw. 76 und dem Außenring 50 bzw. 78 ausgebildeten Klemmspalte 54 und 80 in axialer Richtung 6, 8 hintereinander und in axialer Richtung 6, 8 miteinander fluchtend angeordnet sind. Die Rückstelleinrichtung 22 ist hingegen in radialer Richtung 10, 12 zu dem Starterfreilauf 32 oder/und dem Kopplungsfreilauf 70 versetzt angeordnet. Genauer gesagt ist die Rückstelleinrichtung 22 in der dargestellten Ausführungsform von dem Starterfreilauf 32 oder/und Kopplungsfreilauf 70 in radialer Richtung 10, 12, hier in radialer Richtung 10 nach außen, beabstandet, wobei die Rückstelleinrichtung 22 zumindest mit einem der Freiläufe 32, 70, hier dem Kopplungsfreilauf 70, in radialer Richtung 10, 12 geschachtelt angeordnet ist. Der zuvor erwähnte Radialabschnitt 46 der Eingangsseite 36 des Starterfreilaufs 32 ist hingegen - zumindest teilweise - in einer der axialen Richtungen 6 oder 8 vor oder hinter den beiden Komponenten 18, 20 angeordnet. Genauer gesagt ist der Radialabschnitt 46 in der dargestellten Ausführungsform in der axialen Richtung 6 hinter den beiden Komponenten 18, 20 angeordnet, während er in der axialen Richtung 8 vor den beiden Komponenten 18, 20 angeordnet ist.

Ehe näher auf die Funktionsweise der Startanordnung 2 eingegangen werden soll, werden nachstehend weitere Merkmale des Starterfreilaufs 32 bzw. des Kopplungsfreilaufs 70 unter Bezugnahme auf die Fig. 2 und 3 beschrieben.

Die beiden Freiläufe, nämlich der Starterfreilauf 32 und der Kopplungsfreilauf 70, sind im Wesentlichen baugleich ausgebildet, so dass die nachstehenden Ausführungen zu den Fig. 2 und 3 in entsprechender Weise für den Starterfreilauf 32 und den Kopplungsfreilauf 70 gelten. In den Fig. 2 und 3 ist beispielhaft einer der Klemmkörper 52 bzw. 82 innerhalb des Klemmspalts 54; 80 dargestellt. Während eine dem Klemmspalt 54; 80 zugewandte Lauffläche 88 des Innenrings 48; 76 in den Umfangsrichtungen 14, 16 kreisförmig umlaufend ausgebildet ist, ist eine dem Klemmspalt 54; 80 zugewandte Lauffläche 90 des Außenrings 50; 78 derart ausgebildet, dass diese eine von einer Kreisform abweichende Form aufweist. Genauer gesagt ist die Lauffläche 90 zumindest im Bereich des jeweiligen Klemmkörpers 52; 82 derart ausgebildet, dass sich die radiale Ausdehnung des Klemmspaltes 54; 80 in Umfangsrichtung 14 verringert, so dass auch von einem sich teilweise in Umfangsrichtung 14 verjüngenden Klemmspalt 54; 80 gesprochen werden kann. Auch ist der jeweilige Klemmkörper 52; 82 in Umfangsrichtung 14 mittels einer Federeinrichtung 92 vorgespannt, wobei die Federeinrichtung 92 einerseits an dem Klemmkörper 52; 82 und andererseits an dem Außenring 50; 78, hier einem Ansatz 94 an dem Außenring 50; 78, abgestützt ist. Allgemein gesprochen sind sowohl der Starterfreilauf 32 als auch der Kopplungsfreilauf 70 derart ausgebildet, dass eine Verdrehung des Innenrings 48; 76 in Umfangsrichtung 14 relativ zu dem Außenring 50; 78 ein Verklemmen der Klemmkörper 52; 82 bewirkt, so dass sich der Freilauf 32; 70 in einer Klemmstellung befindet, während ein Verdrehen des Innenrings 48; 76 in Umfangsrichtung 16 relativ zu dem Außenring 50; 78 zu einer Öffnungsstellung des Freilaufs 32; 70 führt.

Nachstehend werden weitere Merkmale der Startanordnung 2 sowie deren Funktionsweise unter Bezugnahme auf die Fig. 1 bis 3 beschrieben.

Zum Starten des Antriebsstrangs des Kraftfahrzeugs bzw. des Verbrennungsmotors treibt der Startermotor 60 der Starteinrichtung 34 die Ausgangsseite 64 der Starteinrichtung 34 über die Starterwelle 62 an, wobei das die Ausgangsseite 64 der Starteinrichtung 34 ausbildende Starterzahnrad 66 mit der Drehmitnahmekontur 44 an der Eingangsseite 36 des Starterfreilaufs 32 in Drehmitnahmeeingriff steht. Hierdurch wird die Eingangsseite 36 des Starterfreilaufs 32 in Umfangsrichtung 14 gedreht bzw. angetrieben, so dass der Innenring 48 ebenfalls in Umfangsrichtung 14 gedreht wird, woraufhin das Verklemmen der Klemmkörper 52 zwischen dem Innenring 48 und dem Außenring 50 bewirkt, dass auch der Außenring 50 und die mit dem Außenring 50 in Drehmitnahmeverbindung stehende erste Komponente 18 in Umfangsrichtung 14 angetrieben oder gedreht wird.

Aufgrund der Drehmitnahmeverbindung zwischen der Eingangsseite 36 des Starterfreilaufs 32 und der Eingangsseite 72 des Kopplungsfreilaufs 70 wird ferner der Innenring 76 des Kopplungsfreilaufs 70 in Umfangsrichtung 14 angetrieben oder gedreht, so dass die innerhalb des Klemmspaltes 80 angeordneten Klemmkörper 82 verklemmen und auch die Ausgangsseite 74 des Kopplungsfreilaufes 70 in Form des Außenrings 78 und die mit dem Außenring 78 in Drehmitnahmeverbindung stehende zweite Komponente 20 in Umfangsrichtung 14 angetrieben oder gedreht wird. Mithin wird die Kopplungseinrichtung 68 in Form des Kopplungsfreilaufes 70 allein durch Antreiben der Eingangsseite 36 des Starterfreilaufs 32 aktuiert bzw. aktiviert. Hierdurch ist eine Drehbewegung der zweiten Komponente 20 relativ zu der ersten Komponente 18 zumindest in der entgegengesetzten Umfangsrichtung 16 behinderbar oder verhinderbar. Nach erfolgtem Start, bei der die Drehzahl der ersten und zweiten Komponente 18, 20 die Drehzahl der Eingangsseiten 36, 72 übersteigt, ist die Klemmwirkung der beiden Freiläufe 32, 70 im Wesentlichen aufgehoben, so dass die Starteinrichtung 34 trotz permanenter Drehmitnahmeverbindung mit der Eingangsseite 36 des Starterfreilaufs 32 abgeschaltet werden kann, während der Torsionsschwingungsdämpfer 4 in üblicher Weise die von dem Verbrennungsmotor herrührenden Drehschwingungen dämpft. Bei entsprechender Drehzahl der ersten und zweiten Komponente 18, 20 sind die Klemmkörper 52; 82 derart entgegen der Federkraft der Federeinrichtungen 92 zurückgestellt, dass diese von dem Innenring 48; 76 bzw. der entsprechenden Lauffläche 88 abgehoben sind, um eine unnötige Reibung in diesem Bereich zu vermeiden, wie dies in Fig. 3 angedeutet ist.

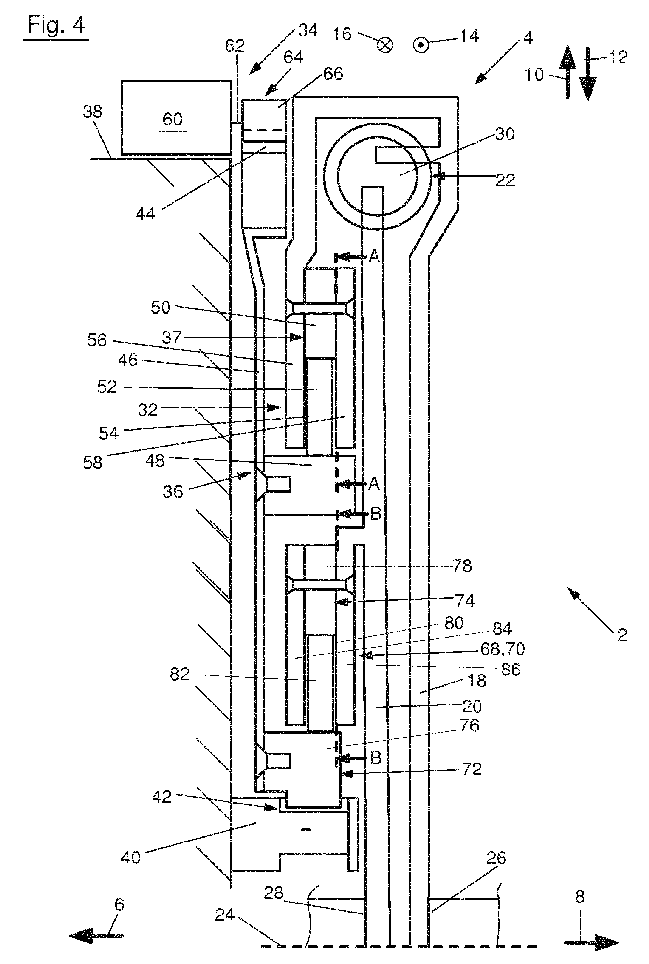

Fig. 4 zeigt eine zweite Ausführungsform der Startanordnung 2, die im Wesentlichen der Ausführungsform nach den Fig. 1 bis 3 entspricht, so dass nachstehend lediglich auf die Unterschiede eingegangen werden soll, gleiche Bezugszeichen für gleiche oder ähnliche Teile verwendet werden und die vorangehende Beschreibung im Übrigen entsprechend gilt.

In der zweiten Ausführungsform nach Fig. 4 sind der Starterfreilauf 32 und der Kopplungsfreilauf 70 in radialer Richtung 10, 12 zueinander versetzt angeordnet. Genauer gesagt sind der Starterfreilauf 32 und der Kopplungsfreilauf 70 nicht nur in radialer Richtung 10, 12 zueinander versetzt, sondern vielmehr auch in radialer Richtung 10, 12 voneinander beabstandet und radial geschachtelt angeordnet, so dass - zumindest in der dargestellten Ausführungsform - der Starterfreilauf 32 den Kopplungsfreilauf 70 in radialer Richtung 10 außen umgibt. Hierdurch kann eine besonders kurze axiale Bauweise erzielt werden. Auch ist die Rückstelleinrichtung 22 mit dem Starterfreilauf 32 oder/und dem Kopplungsfreilauf 70 in radialer Richtung 10, 12 geschachtelt angeordnet, in der dargestellten Ausführungsform sowohl mit dem Starterfreilauf 32 als auch mit dem Kopplungsfreilauf 70, die ja bereits in radialer Richtung 10, 12 geschachtelt sind. Hierbei ist es bevorzugt, wenngleich nicht zwingend, wenn die Rückstelleinrichtung 22 beide Freiläufe 32, 70 radial außen umgibt. In der dargestellten Ausführungsform ist der den Innenring 48 mit der Drehmitnahmekontur 44 verbindende Radialabschnitt 46 in radialer Richtung 12 nach innen über den Innenring 48 hinaus verlängert, um mit der Eingangsseite 72 des Kopplungsfreilaufes 70 bzw. dem Innenring 76 in Drehmitnahmeverbindung zu stehen oder drehfest hieran befestigt zu sein.

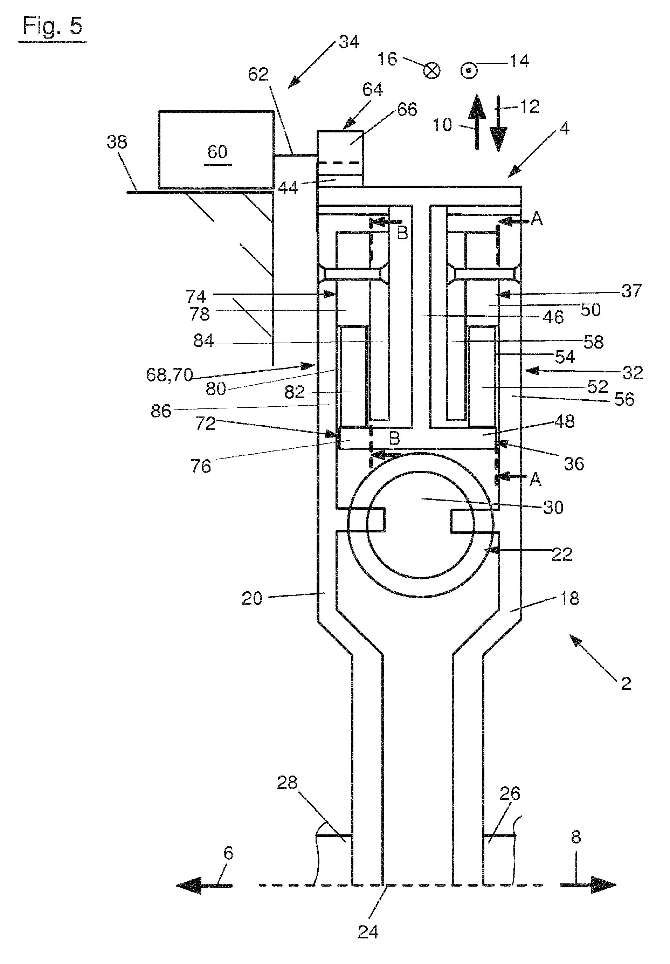

Fig. 5 zeigt eine dritte Ausführungsform der Startanordnung 2, die im Wesentlichen der ersten Ausführungsform nach den Fig. 1 bis 3 entspricht, so dass nachstehend lediglich auf die Unterschiede eingegangen wird, gleiche Bezugszeichen für gleiche oder ähnliche Teile verwendet werden und die vorangehende Beschreibung im Übrigen entsprechend gilt.

In der dritten Ausführungsform erstreckt sich der die Drehmitnahmekontur 44 mit dem Innenring 48 verbindende Radialabschnitt 46 zwischen die beiden Komponenten 18, 20, so dass der Radialabschnitt 46 zumindest teilweise in axialer Richtung 6, 8 zwischen der ersten Komponente 18 und der zweiten Komponente 20 angeordnet ist. Auch ist die Eingangsseite 36 des Starterfreilaufs 32, mithin auch die Eingangsseite 72 des Kopplungsfreilaufes 70, in radialer oder/und axialer Richtung 10, 12; 6, 8 an zumindest einer der beiden Komponenten 18, 20 - hier sowohl an der ersten Komponente 18 als auch an der zweiten Komponente 20 - abstützbar oder abgestützt, wobei dies in der dargestellten Ausführungsform über die beiden Gleitlager 96, 98 erfolgt, die an dem in radialer Richtung 10 nach außen weisenden Außenumfang der jeweiligen Komponente 18 bzw. 20 vorgesehen sind. Auch werden die Eingangsseiten 36 und 72 der beiden Freiläufe 32, 70 im Wesentlichen von einem in Umfangsrichtung 14, 16 ringförmig umlaufenden Bauteil mit einem H-förmigen Querschnitt gebildet, wobei dieses Bauteil einstückig oder mehrteilig ausgebildet sein kann.

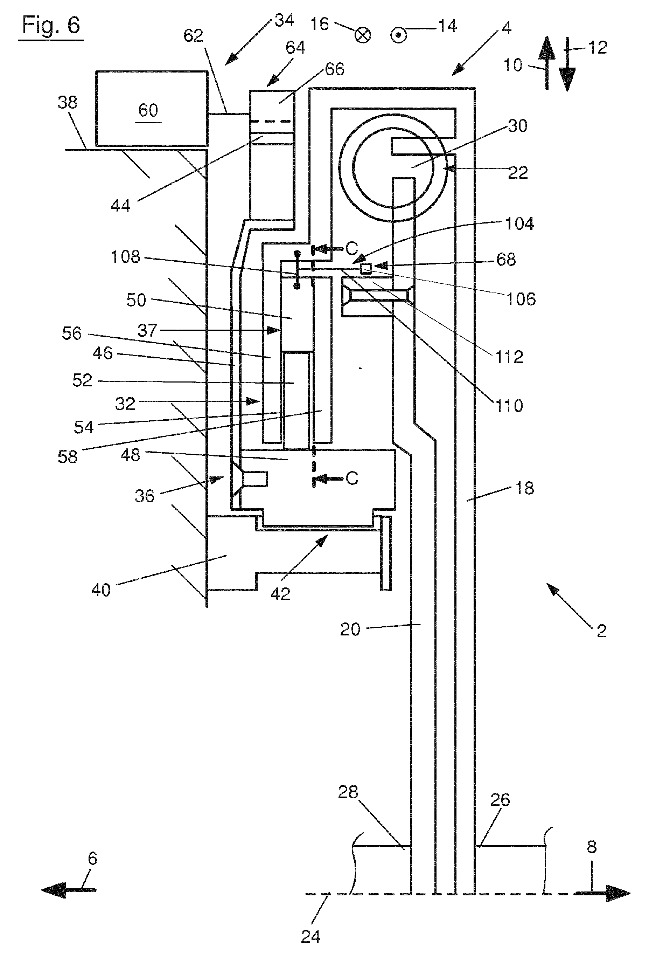

Wenngleich in den Fig. 1 bis 5 sowie auch in den nachfolgenden Fig. 6 bis 10 nicht dargestellt, so können grundsätzlich auch Ausführungsformen von der Erfindung umfasst sein, bei denen die axiale oder/und radiale Abstützung zumindest einer oder beider Eingangsseiten 36, 72 an einem feststehenden Bauteil 38 und an einer der Komponenten 18 oder/und 20 erfolgt.

Die Fig. 6 bis 8 zeigen eine vierte Ausführungsform der Startanordnung 2, die im Wesentlichen der Ausführungsform nach den Fig. 1 bis 3 entspricht, so dass nachstehend lediglich auf die Unterschiede eingegangen wird, gleiche Bezugszeichen für gleiche oder ähnliche Teile verwendet werden und die vorangehende Beschreibung im Übrigen entsprechend gilt.

In der vierten Ausführungsform ist die Kopplungseinrichtung 68 nicht von einem Kopplungsfreilauf 70 gebildet, außerdem ist die Kopplungseinrichtung 68 über die Ausgangsseite 37 des Starterfreilaufs 32 aktuierbar oder aktivierbar, wie dies nachstehend näher erläutert werden soll.

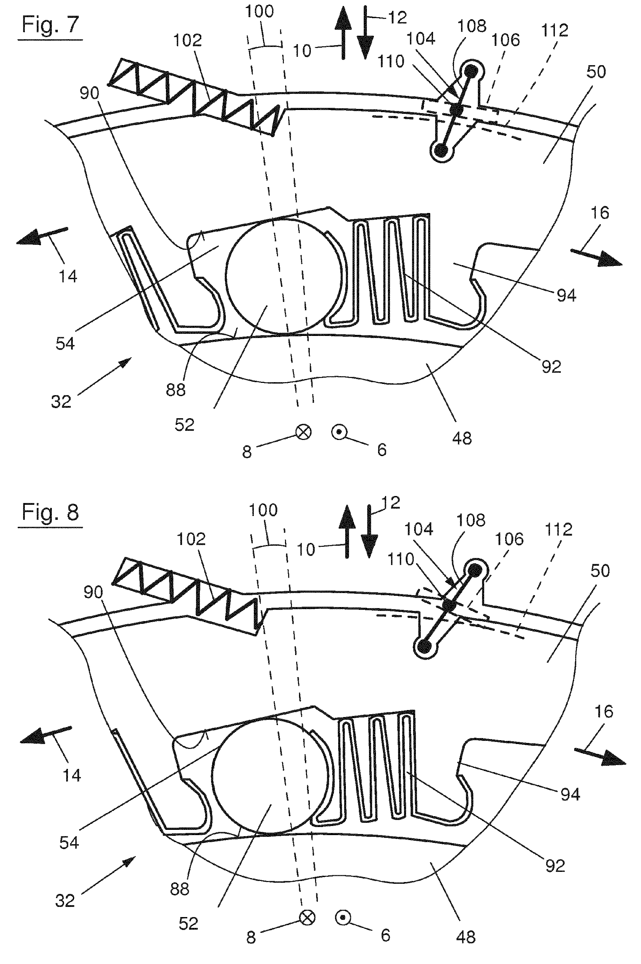

Wie insbesondere aus den Fig. 7 und 8 ersichtlich, ist die Ausgangsseite 37 des Starterfreilaufs 32 - hier in Form des Außenrings 50 - trotz der bestehenden Drehmitnahmeverbindung zwischen der Ausgangsseite 37 und der ersten Komponente 18 in einem vorbestimmten Drehwinkelbereich 100 relativ zu der ersten Komponente 18 verdrehbar. Genauer gesagt kann die Ausgangsseite 37 ausgehend von einer ersten Drehstellung in Fig. 7, in die die Ausgangsseite 37 mittels einer Federeinrichtung 102 vorgespannt ist, in Umfangsrichtung 14 und entgegen der Rückstellkraft der Federeinrichtung 102 relativ zu der ersten Komponente 18 in die in Fig. 8 gezeigte zweite Drehstellung verdreht werden. Die Kopplungseinrichtung 68 wirkt dabei derart mit der Ausgangsseite 37 des Starterfreilaufs 32 zusammen, dass diese in der ersten Drehstellung in eine Öffnungsstellung und in der zweiten Drehstellung in eine Kopplungsstellung überführt ist, in der die erste und zweite Komponente 18, 20 über die Kopplungseinrichtung 68, vorzugsweise form- oder/und kraft- oder/und reibschlüssig, miteinander gekoppelt sind.

In der dargestellten Ausführungsform wird dies dadurch bewirkt, dass eine Mechanik 104 vorgesehen, die ein Reib- oder Rastelement 106 der Kopplungseinrichtung 68 derart in Abhängigkeit von der Drehstellung der Ausgangsseite 37 des Starterfreilaufs 32 relativ zu der ersten Komponente 18 bewegt, dass dieses in der Kopplungsstellung der Kopplungseinrichtung 68 (Fig. 8) mit der zweiten Komponente 20 zusammenwirkt und in der Öffnungsstellung der Kopplungseinrichtung 68 außer Wirkzusammenhang mit der zweiten Komponente 20 gebracht ist. In der dargestellten Ausführungsform ist die Mechanik 104 von einem Hebel 108, der durch Relativverdrehung der Ausgangsseite 37 zu der ersten Komponente 18 verschwenkbar ist, und einer mit dem Reib- oder Rastelement 106 wirkverbundenen Welle 110 verbunden, wobei letztere zusammen mit dem Hebel 108 verdrehbar ist. Wie aus Fig. 8 ersichtlich, verdreht die Welle 110 das Reib- oder Rastelement 106 in der Kopplungsstellung derart, dass das Reib- oder Rastelement 106 mit einem entsprechenden Gegenelement 112 an der zweiten Komponente 20 zusammenwirkt, um die Kopplung zu bewirken.

Der Startvorgang gestaltet sich zunächst wie unter Bezugnahme auf die Fig. 1 bis 3 beschrieben, jedoch erfolgt zunächst eine Relativdrehung der Ausgangsseite 37 des Starterfreilaufs 32 relativ zu der ersten Komponente 18, wobei durch Überführen der Ausgangsseite 37 von der ersten Drehstellung in die zweite Drehstellung nach Fig. 8 die Kopplungseinrichtung 68 über die Mechanik 104 aktuiert oder aktiviert wird, so dass im Rahmen des Startvorgangs beide Komponenten 18, 20 in Umfangsrichtung 14 angetrieben werden. Übersteigt die Drehzahl der ersten Komponente 18 die Drehzahl der Eingangsseite 36 des Starterfreilaufs 32, so bewirkt die Federeinrichtung 102 ein Zurückstellen der Ausgangsseite 37 des Starterfreilaufs 32 in die in Fig. 7 gezeigte erste Drehstellung, woraufhin auch die Kopplungseinrichtung 68 wieder deaktuiert bzw. deaktiviert wird. Es sei in diesem Zusammenhang erwähnt, dass die Kopplungseinrichtung 68 in ihrer Öffnungsstellung nach den Fig. 6 und 7 nicht zwangsläufig eine vollständige Entkopplung zwischen erster und zweiter Komponente 18, 20 bewirken muss, vielmehr kann auch in der Öffnungsstellung zumindest noch eine Behinderung der relativen Drehbewegung zwischen erster Komponente und zweiter Komponente 18, 20 gegeben sein, beispielsweise durch Reibung zwischen dem Element 106 und dem Gegenelement 112.

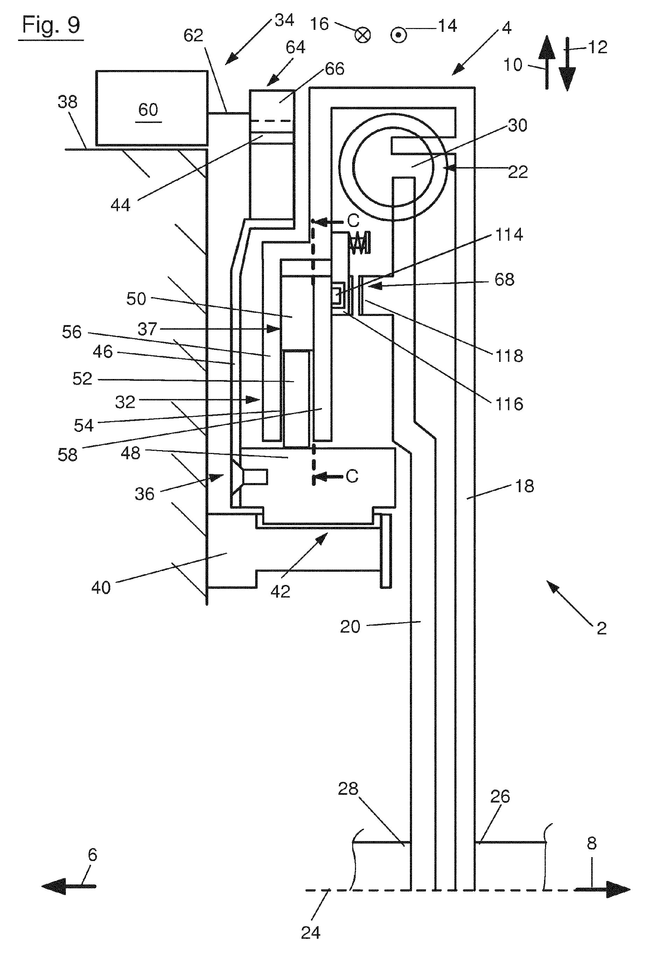

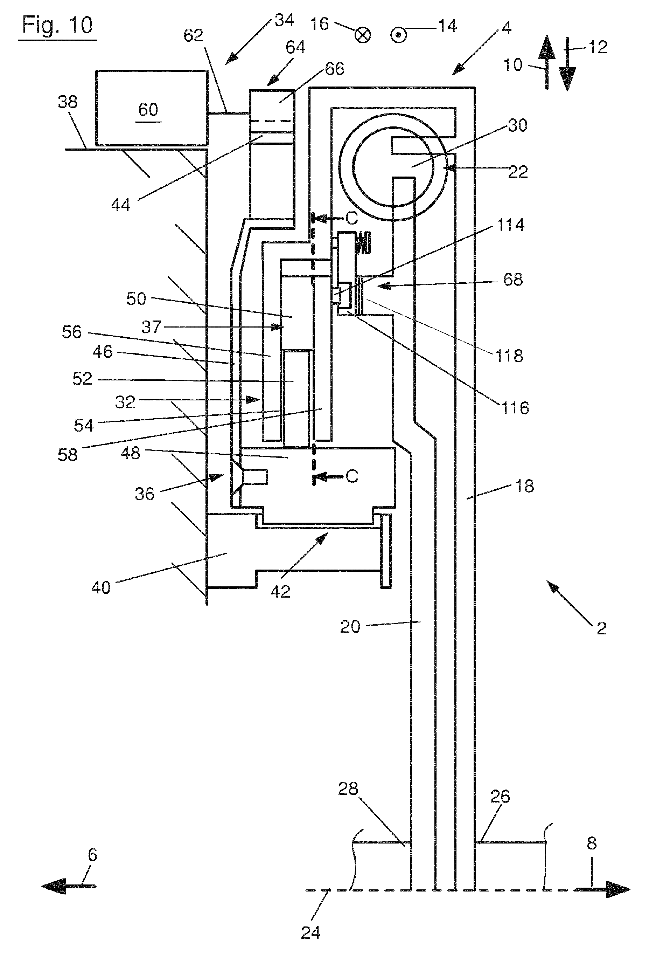

Die Fig. 9 und 10 zeigen eine fünfte Ausführungsform der Startanordnung 2, die im Wesentlichen der Ausführungsform nach den Fig. 6 bis 8 entspricht, so dass nachstehend lediglich auf die Unterschiede eingegangen wird, gleiche Bezugszeichen für gleiche oder ähnliche Teile verwendet werden und die vorangehende Beschreibung im Übrigen entsprechend gilt.

Bei der fünften Ausführungsform ist die Ausgangsseite 37 des Starterfreilaufs 32 wie bereits zuvor unter Bezugnahme auf die Fig. 6 bis 8 beschrieben ebenfalls in dem vorbestimmten Drehwinkelbereich 100 relativ zu der ersten Komponente 18 verdrehbar, jedoch wird die Drehbewegung der Ausgangsseite 37 des Starterfreilaufs 32 durch eine Zwangsführung, hier einer Rampenanordnung 114, in eine Axialbewegung eines Reibelements 116 der Kopplungseinrichtung 68 umgesetzt. Das Reibelement 116 ist dabei axial verschiebbar, jedoch drehfest an der ersten Komponente 18 angeordnet und einem anderen Reibelement 118 zugeordnet, das drehfest an der zweiten Komponente 20 angeordnet ist. Beide Reibelemente 116 und 118 der Kopplungseinrichtung 68 sind hier in Umfangsrichtung 14, 16 umlaufend bzw. ringförmig ausgebildet. Wird die Ausgangsseite 37 relativ zu der ersten Komponente 18 von der ersten in die zweite Drehstellung verdreht, so wird das Reibelement 116 in einem vorbestimmten Axialbereich relativ zu der ersten Komponente 18 bewegt. Genauer gesagt ist das Reibelement 116 durch Verdrehen der Ausgangsseite 37 von der ersten Drehstellung in die zweite Drehstellung von einer ersten Axialstellung, die in Fig. 9 gezeigt ist, in eine zweite Axialstellung bewegt, die in Fig. 10 gezeigt ist. Wie aus den Fig. 9 und 10 ersichtlich, ist ein Axialabstand zwischen dem Reibelement 116 und der ersten Komponente 18 in der zweiten Axialstellung größer als in der ersten Axialstellung, wobei ferner ein Axialabstand zwischen dem Reibelement 116 und der zweiten Komponente 20 in der zweiten Axialstellung kleiner als in der ersten Axialstellung ist. In der Kopplungsstellung der Kopplungseinrichtung 68 (Fig. 10) stehen die Reibelemente 116, 118 miteinander in Reibeingriff und in der Öffnungsstellung der Kopplungseinrichtung 68 nach Fig. 9 sind diese außer Reibeingriff gebracht oder wirken zumindest nur noch derart zusammen, dass eine geringere Reibkraft als in der Kopplungsstellung entsteht. Allgemein gesprochen ist die Kopplungseinrichtung 68 durch Verdrehen der Ausgangsseite 37 des Starterfreilaufs 32 relativ zu der ersten Komponente 18 in axialer Richtung 6, 8 - hier in axialer Richtung 8 - aktuierbar oder aktivierbar ist.

Bei der fünften Ausführungsform ist das Reibelement 116 vorzugsweise auch in die erste Axialstellung nach Fig. 9 vorgespannt, wobei dies bei entsprechender Auslegung der Zwangsführung, gegebenenfalls der Rampenanordnung 114 oder einer weiteren Rampenanordnung, auch über die Federeinrichtung 102 zur Vorspannung der Ausgangsseite 37 des Starterfreilaufs 32 in dessen erste Drehstellung erfolgen kann.

### Bezugszeichenliste

- 2: Startanordnung
- 4: Torsionsschwingungsdämpfer
- 6: axiale Richtung
- 8: axiale Richtung
- 10: radiale Richtung
- 12: radiale Richtung
- 14: Umfangsrichtung
- 16: Umfangsrichtung
- 18: erste Komponente
- 20: zweite Komponente
- 22: Rückstelleinrichtung
- 24: Drehachse
- 26: Anbindung
- 28: Anbindung
- 30: Aufnahmeraum
- 32: Starterfreilauf
- 34: Starteinrichtung
- 36: Eingangsseite des Starterfreilaufs
- 37: Ausgangsseite des Starterfreilaufs
- 38: feststehendes Bauteil
- 40: Stützteil
- 42: Gleitlager
- 44: Drehmitnahmekontur
- 46: Radialabschnitt
- 48: Innenring
- 50: Außenring
- 52: Klemmkörper
- 54: Klemmspalt
- 56: Abschnitt
- 58: Begrenzungswand
- 60: Startermotor
- 62: Starterwelle
- 64: Ausgangsseite
- 66: Starterzahnrad
- 68: Kopplungseinrichtung
- 70: Kopplungsfreilauf
- 72: Eingangsseite des Kopplungsfreilaufs
- 74: Ausgangsseite des Kopplungsfreilaufs
- 76: Innenring
- 78: Außenring
- 80: Klemmspalt
- 82: Klemmkörper
- 84: Begrenzungswand
- 86: Abschnitt
- 88: Lauffläche
- 90: Lauffläche
- 92: Federeinrichtung
- 94: Ansatz
- 96: Gleitlager
- 98: Gleitlager
- 100: Drehwinkelbereich
- 102: Federeinrichtung
- 104: Mechanik
- 106: Reib- oder Rastelement
- 108: Hebel
- 110: Welle
- 112: Gegenelement
- 114: Rampenanordnung
- 116: Reibelement
- 118: Reibelement

## Patentansprüche

1. Startanordnung (2) für den Antriebsstrang eines Kraftfahrzeugs mit einem Torsionsschwingungsdämpfer (4), der eine erste Komponente (18) und eine zweite Komponente (20) aufweist, die gegen den Widerstand einer Rückstelleinrichtung (22) relativ zueinander verdrehbar sind, zur Anordnung in dem Antriebsstrang und einem Starterfreilauf (32), der eine von einer Starteinrichtung (34) antreibbare Eingangsseite (36) und eine mit der ersten Komponente (18) in Drehmitnahmeverbindung stehende oder bringbare Ausgangsseite (37) aufweist, **dadurch gekennzeichnet, dass** eine Kopplungseinrichtung (68) vorgesehen ist, über die eine Drehbewegung der zweiten Komponente (20) relativ zu der ersten Komponente (18) in zumindest einer Umfangsrichtung (14; 16) behinderbar oder verhinderbar ist, wobei die Kopplungseinrichtung (68) über den Starterfreilauf (32) aktuierbar oder aktivierbar ist.

2. Startanordnung (2) nach Anspruch 1, **dadurch gekennzeichnet, dass** die Kopplungseinrichtung (68) durch Antreiben der Eingangsseite (36) des Starterfreilaufs (32) oder/und über die Eingangsseite (36) oder Ausgangsseite (37) des Starterfreilaufs (32) aktuierbar oder aktivierbar ist.

3. Startanordnung (2) nach einem der Ansprüche 1 oder 2, **dadurch gekennzeichnet, dass** die Kopplungseinrichtung (68) einen Kopplungsfreilauf (70) aufweist, der eine mit der Eingangsseite (36) des Starterfreilaufs (32) in Drehmitnahmeverbindung stehende oder von der Eingangsseite (36) des Starterfreilaufs (32) gebildete Eingangsseite (72) und eine mit der zweiten Komponente (20) in Drehmitnahmeverbindung stehende Ausgangsseite (74) aufweist.

4. Startanordnung (2) nach Anspruch 3, **dadurch gekennzeichnet, dass** der Starterfreilauf (32) und der Kopplungsfreilauf (70) in axialer Richtung (6, 8) hintereinander, gegebenenfalls in axialer Richtung (6, 8) miteinander fluchtend, angeordnet sind, wobei die Rückstelleinrichtung (22) vorzugsweise in radialer Richtung (10, 12) zu dem Starter- oder/und Kopplungsfreilauf (32; 70) versetzt, vorzugsweise von dem Starter- oder/und Kopplungsfreilauf (32; 70) beabstandet, besonders bevorzugt mit dem Starter- oder/und Kopplungsfreilauf (32; 70) geschachtelt, angeordnet ist.

5. Startanordnung (2) nach einem der Ansprüche 3 oder 4, **dadurch gekennzeichnet, dass** der Starterfreilauf (32) und der Kopplungsfreilauf (70) in radialer Richtung (10, 12) zueinander versetzt, vorzugsweise voneinander beabstandet, besonders bevorzugt geschachtelt, angeordnet sind, wobei die Rückstelleinrichtung (22) gegebenenfalls mit dem Starter- oder/und Kopplungsfreilauf (32; 70) radial geschachtelt angeordnet ist.

6. Startanordnung (2) nach einem der Ansprüche 1 oder 2, **dadurch gekennzeichnet, dass** die Kopplungseinrichtung (68) mit der Ausgangsseite (37) des Starterfreilaufs (32) zusammenwirkt, die in einem vorbestimmten Drehwinkelbereich (100) relativ zu der ersten Komponente (18) von einer ersten Drehstellung in eine zweite Drehstellung verdrehbar ist, in der die erste und zweite Komponente (18, 20) über die Kopplungseinrichtung (68), vorzugsweise form- oder/und kraft- oder/und reibschlüssig, miteinander gekoppelt sind.

7. Startanordnung (2) nach Anspruch 6, **dadurch gekennzeichnet, dass** die Kopplungseinrichtung (68) durch Verdrehen der Ausgangsseite (37) des Starterfreilaufs (32) relativ zu der ersten Komponente (18) in axialer Richtung (6, 8) aktuierbar oder aktivierbar ist, wobei vorzugsweise eine Zwangsführung zur Umsetzung der Drehbewegung der Ausgangsseite (37) des Starterfreilaufs (32) in eine Axialbewegung der Kopplungseinrichtung (68) vorgesehen ist, die besonders bevorzugt als Rampenanordnung (114) ausgebildet ist.

8. Startanordnung (2) nach einem der Ansprüche 6 oder 7, **dadurch gekennzeichnet, dass** die Ausgangsseite (37) des Starterfreilaufs (32) in die erste Drehstellung vorgespannt ist.

9. Startanordnung (2) nach einem der vorangehenden Ansprüche, **dadurch gekennzeichnet, dass** die Eingangsseite (36; 72) des Starterfreilaufs (32) oder/und des Kopplungsfreilaufs (70) einen Innenring (48; 76) aufweist, während die Ausgangsseite (37; 74) des Starterfreilaufs (32) oder/und des Kopplungsfreilaufs (70) einen Außenring (50; 78) aufweist, zwischen denen Klemmkörper (52; 82) des Starterfreilaufs (32) oder/und des Kopplungsfreilaufs (70) angeordnet sind.

10. Startanordnung (2) nach einem der vorangehenden Ansprüche, **dadurch gekennzeichnet, dass** die Eingangsseite (36) des Starterfreilaufs (32) eine Drehmitnahmekontur (44), vorzugsweise eine Verzahnung, besonders bevorzugt eine Außenverzahnung, aufweist, über die die Eingangsseite (36) des Starterfreilaufs (32) mit einer Starteinrichtung (34) in Drehmitnahmeverbindung bringbar oder gebracht ist.

11. Startanordnung (2) nach einem der vorangehenden Ansprüche, **dadurch gekennzeichnet, dass** die Eingangsseite (36) des Starterfreilaufs (32) einen sich im Wesentlichen in radialer Richtung (10, 12) erstreckenden Radialabschnitt (46) aufweist, an dem die Drehmitnahmekontur angeordnet ist und der vorzugsweise die Drehmitnahmekontur (44) mit dem Innenring (48) verbindet, wobei der Radialabschnitt (46) besonders bevorzugt in axialer Richtung (6, 8) zwischen der ersten und zweiten Komponente (18, 20) oder vor oder hinter den beiden Komponenten (18, 20) angeordnet ist.

12. Startanordnung (2) nach einem der vorangehenden Ansprüche, **dadurch gekennzeichnet, dass** die Eingangsseite (36; 72) des Starterfreilaufs (32) oder/und des Kopplungsfreilaufs (70) in radialer oder/und axialer Richtung (10, 12; 6, 8) an einem feststehenden Bauteil (38), vorzugsweise einem Gehäuse, abstützbar oder abgestützt ist, wobei die Eingangsseiten (36, 72) des Starterfreilaufs (32) und des Kopplungsfreilaufs (70) besonders bevorzugt über ein gemeinsames Lager oder Gleitlager (42) an dem feststehenden Bauteil (38) abstützbar oder abgestützt sind.

13. Startanordnung (2) nach einem der vorangehenden Ansprüche, **dadurch gekennzeichnet, dass** die Eingangsseite (36; 72) des Starterfreilaufs (32) oder/und des Kopplungsfreilaufs (70) in radialer oder/und axialer Richtung (10, 12; 6, 8) an der ersten oder/und zweiten Komponente (18; 20), vorzugsweise über ein Gleitlager (96; 98), abstützbar oder abgestützt ist.

14. Startanordnung (2) nach einem der vorangehenden Ansprüche, **dadurch gekennzeichnet, dass** die Startanordnung (2) eine Starteinrichtung (34) zum Antreiben der Eingangsseite (36) des Starterfreilaufs (32) aufweist, wobei eine Ausgangsseite (64) der Starteinrichtung (34) vorzugsweise permanent mit der Eingangsseite (36) des Starterfreilaufs (32) in Drehmitnahmeverbindung steht und die Ausgangsseite (64) der Starteinrichtung (34) besonders bevorzugt ein Starterzahnrad (66) aufweist, das permanent mit der Verzahnung der Eingangsseite (36) des Starterfeilaufs (32) in Drehmitnahmeeingriff steht.

15. Startanordnung (2) nach einem der vorangehenden Ansprüche, **dadurch gekennzeichnet, dass** die erste oder zweite Komponente (18; 20) mit einer Ausgangsseite eines Verbrennungsmotors, vorzugsweise einer Antriebswelle des Verbrennungsmotors, drehfest verbindbar oder verbunden ist oder in Drehmitnahmeverbindung bringbar ist oder steht, während die zweite oder erste Komponente (18; 20) vorzugsweise mit einer Eingangsseite eines Getriebes oder einer Kupplungseinrichtung drehfest verbindbar oder verbunden ist oder in Drehmitnahmeverbindung bringbar ist oder steht.
